# EUROPEAN PATENT APPLICATION

(11) **EP 1 389 032 A2**
(43) Date of publication of application: **11.02.2004**
(21) Application number: 03016321.6
(22) Date of filing: 18.07.2003
(51) Int. Cl.: H04R 1/38

(54) **Receiver unit**

(30) Priority: 29.07.2002 JP 2002219884; 14.01.2003 JP 2003005809
(71) Applicant: HOSIDEN CORPORATION, Higashiosaka-shi, Osaka (JP)
(72) Inventor: Miyakura, Takashi, Higashiosaka-shi, Osaka (JP)
(74) Representative: Fleuchaus, Leo, Dipl.-Ing.

(57) **Abstract**

The present invention relates to a receiver unit (A) having a receiver body (1), and more particularly to a receiver unit (A) having a receiver body (1) in which a countermeasure for flattening the sound pressure characteristic is taken on the receiver unit itself. According to the invention, the sound pressure characteristic of the receiver unit (A) can be flattened, and a handset to which the receiver unit (A) is attached can be miniaturized. The sound pressure characteristic of the receiver body (1) is flattened by adding a cavity (22, 26) to a front or back portion, or both front and back portions of the receiver body (1). Preferably, the cavity (22, 26) has a Helmholtz resonant structure (6, 7). The cavity (22) has a leakage path (23) which acoustically communicates with the external space. The cavity (22) is formed by the internal space of a case (2) which houses the receiver body (1). A through hole (24) constituting a leakage path (23) is disposed in a wall of the case. The internal space (53) of a handset (5) of a mobile information terminal device is used as the external space. An attachment piece (25) may be disposed on the case (2). The case (2) may be housed in an electrically insulating holder.

## Description

### Background of the Invention

### 1. Field of the Invention

The present invention relates to a receiver unit having a receiver body, and more particularly to a receiver unit having a receiver body in which a countermeasure for flattening the sound pressure characteristic is taken on the receiver unit itself.

### 2. Description of the Prior Art

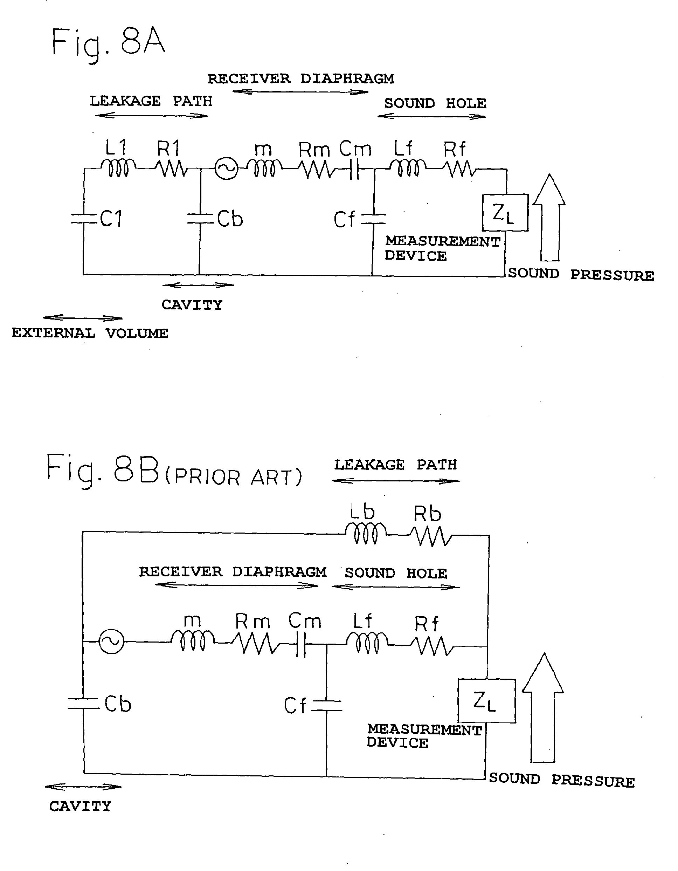

Fig. 7 is a view showing a conventional example. The reference numeral 1 denotes a receiver body, and 5 denotes a handset of a mobile information terminal device such as a portable telephone. The receiver body 1 is fitted into a positioning boss 51 of the handset 5 to be attached to the handset. In the illustrated attachment state, a sound hole (not shown) which is disposed in the front side of the receiver body 1 is opposed to a sound hole 52 of the handset 5, and a cavity 53 of a large volume serving as the internal space of the handset 5 is positioned in the back portion of the receiver body 1. In the handset 5 of a mobile information terminal device of this kind, the cavity 53 serving as the internal space of the handset is often set to have a volume of, for example, about 10 cc.

In the receiver body 1 which is to be attached to the handset 5 of a mobile information terminal device, the sound pressure characteristic (sound pressure-frequency characteristic) in the state where the receiver body is attached to the handset 5 is often evaluated with using a leakage type artificial ear. In this case, in order to obtain a flat sound pressure characteristic, it is necessary to employ a cavity structure in which an adequate leakage path is formed in the back portion of the receiver body 1. The structure shown in Fig. 7 is an example of such a structure.

As a prior art example, Japanese Patent Application Laying-Open No. 61-139189 discloses a cavity structure in which a dynamic receiver (electrically conductive receiver) is used as a receiver body, and, as another prior art example, Japanese Patent Application Laying-Open No. 10-229435 discloses a cavity structure in which a piezoelectric receiver is used as a receiver body. Also Japanese Patent Application Laying-Open No. 11-266489 discloses a cavity structure as a further prior art example. In all of the cavity structures of the prior art examples, the internal space of the handset is used as a cavity in the same manner as that shown in Fig. 7.

As a still further prior art example, Japanese Patent Application Laying-Open No. 2000-49920 discloses a mobile information terminal device having a speaker assembly in which spaces are formed in the front and rear sides of a speaker, and the front and rear spaces are acoustically coupled with a third space. Japanese Patent No. 3,243,616 discloses a still further prior art example in which a cylindrical cylinder is placed between front and rear walls of a handset housing of a mobile information terminal device, and a partition to which an electroacoustic transducer is attached is placed in the cylindrical cylinder, thereby forming chambers (cavities) in front and back of the electroacoustic transducer.

As shown in Fig. 7 and the above-mentioned prior art examples, conventionally, a cavity structure for improving the sound pressure characteristic is realized with using the internal space 53 of the handset 5 as a large-volume cavity.

When, as in the conventional example of Fig. 7 and the above-mentioned prior art examples, a cavity structure is provided with using the internal space of a handset to which a receiver body is attached, however, the shape and structure of the handset which is to be combined with the receiver body must be designed adequately depending on the specification of the receiver body. Even when handsets of the same external shape are used, the desings of the internal structures of the handsets must be changed in accordance with the specifications of receiver bodies, so as to provide cavity structures which are respectively adequate for the specifications. Therefore, very cumbersome works must be inevitably conducted.

Even when the cavity structure of the conventional example or the prior art examples is employed, a peak or a dip according to the frequency exists in the sound pressure characteristic which is measured with using a leakage type artificial ear. In the case where a sufficiently large internal space serving as a cavity cannot be ensured in a handset, particularly, a flat sound pressure characteristic is hardly obtained. Conventionally, it is therefore impossible to obtain a flat sound pressure characteristic unless the internal space 53 of the handset in the back portion of the receiver body 1 is provided with a large volume. The cavity structure for obtaining a flat sound pressure characteristic is a cause of impeding miniaturization of a handset.

### Summary of the Invention

The invention has been conducted under the above circumstances. It is an object of the invention to provide a receiver unit having a structure in which the receiver unit itself is effective in flattening a sound pressure characteristic without depending on the internal volume of a handset of a mobile information terminal device.

It is another object of the invention to provide a receiver unit in which the internal space of a device such as a handset is acoustically coupled with a cavity formed in the receiver unit itself, whereby the sound pressure characteristic can be improved.

It is a further object of the invention to provide a receiver unit which, even when the specification of a receiver body is modified, does not require the design of a device such as a handset to be changed.

It is a still further object of the invention to provide a receiver unit which, when attached to a device such as a handset, occupies a small space required for the attachment, thereby enabling the device such as a handset to be easily miniaturized.

It is a still further object of the invention to provide a receiver unit which has a high degree of freedom in selection of a position where the receiver unit is to be attached to a device such as a handset, and in which a cavity formed in the receiver unit itself is acoustically coupled with the internal space of the device, whereby the sound pressure characteristic can be improved.

It is a still further object of the invention to provide a receiver unit in which a resonant structure is formed in a cavity that is additionally formed in the back portion of a receiver body, thereby obtaining a sound pressure characteristic which has a peak in the vicinity of the resonance frequency.

It is a still further object of the invention to provide a receiver unit in which a resonant structure is formed in a cavity that is additionally formed in the front portion of a receiver body, thereby obtaining a sound pressure characteristic which has a dip in the vicinity of the resonance frequency.

It is a still further object of the invention to provide a receiver unit in which a flat sound pressure characteristic can be obtained with using the resonant structure.

It is a still further object of the invention to provide a receiver unit which has a high degree of freedom in design of the resonance frequency of a resonant structure.

The receiver unit of the present invention is a receiver unit having a receiver body wherein the receiver unit has: the receiver body; and a cavity which is attached to an outer side of the receiver body to flatten a sound pressure characteristic of the receiver body.

In the invention, the sound pressure characteristic of the receiver body may be flattened by: adding the cavity to a back portion of the receiver body; adding the cavity to a front portion of the receiver body; or adding the cavity to each of back and front portions of the receiver body.

The terms "adding the cavity to a back portion of the receiver body" mean that the receiver body itself comprises a cavity in the back portion of receiver body, and excludes a structure in which the internal space of the handset is in contact with the back face of the receiver body. Similarly, the terms "adding the cavity to a front portion of the receiver body" mean that the receiver body itself comprises a cavity in the front portion of receiver body, and excludes a structure in which the internal space of the handset is in contact with the front face of the receiver body.

In the invention, preferably, the cavity is formed by an internal space of a case which houses the receiver body.

According to these inventions, even when the cavity has a smaller volume than that in the case where a cavity structure in which only the internal space of the handset is used as a cavity is employed, the flattening of the sound pressure characteristic can be remarkably attained. This will be described in more detail in the description of the embodiments.

In the invention, preferably, the cavity is formed by an internal space of a case which houses the receiver body, and a through hole constituting a leakage path is formed in a wall of the case. According to the configuration, even when the cavity has a small volume, the flattening of the sound pressure characteristic can be remarkably attained as described above, so that the case can be easily miniaturized. This contributes to easiness of miniaturization of a device such as a handset.

In the invention, preferably, a resonant structure is added to the cavity. In the case where a resonant structure is added to the cavity, when the resonant structure is added to a front cavity of the receiver body, a sound pressure characteristic which has a dip in the vicinity of the resonance frequency is obtained. When the resonant structure is added to a back cavity of the receiver body, a sound pressure characteristic which has a peak in the vicinity of the resonance frequency is obtained. When the resonant structure is added to both front and back portions of the receiver body, a flat sound pressure characteristic is obtained.

In the invention, preferably, the resonant structure comprises: a hollow chamber which is formed in the cavity by a partition wall; and a through hole which is opened in the partition wall to acoustically couple the cavity with the hollow chamber. The resonant structure is a Helmholtz resonant structure. The use of a Helmholtz resonant structure produces an advantage that the resonance frequency can be determined from the relationship between the size of the through hole of the partition wall and the volume of the hollow chamber.

In the invention, preferably, the sound pressure characteristic is based on evaluation using a leakage type artificial ear. This is because, as described at the beginning of the specification, a sound pressure characteristic is often evaluated with using a leakage type artificial ear.

In the invention, preferably, the cavity comprises a leakage path which acoustically communicates with an external space. According to the configuration, when the receiver unit is attached to a device such as a handset, the internal space of the handset of the device can be used as the external space which is to be acoustically coupled with the cavity via the leakage path. In the invention, therefore, it is possible to employ a configuration in which the external space is an internal space of a handset of a mobile information terminal device. According to the configuration, the flattening of the sound pressure characteristic can be easily expedited.

In the invention, an attachment piece for attaching the case to a handset of a mobile information terminal device may be molded integrally with the case. According to the configuration, the case can be attached to the handset via the attachment piece.

In the invention, the case may be housed in an electrically insulating holder having an opening through which a sound hole forming region of the receiver body is exposed, and the through hole is passed through the holder.

As described above, according to the invention, the receiver unit itself can comprise a cavity structure for flattening the sound pressure characteristic. Furthermore, the sound pressure characteristic can be improved by causing the cavity of the receiver unit to acoustically communicate with the internal space of a device such as a handset through a leakage path. Even when the specification of the receiver body is modified, therefore, it is not required to change the design of a device such as a handset. Moreover, the occupying space for attachment can be made small, and hence miniaturization of the device such as a handset can be easily realized.

In the configuration in which the resonance structure is added to the front and/or back portion of the receiver unit, it is possible to attain the effect that a sound pressure characteristic which has a peak in the vicinity of the resonance frequency can be obtained, that which has a dip in the vicinity of the resonance frequency can be obtained, or a flat sound pressure characteristic can be obtained by using such a resonance structure. In addition, it is possible to provide a receiver unit which has a high degree of freedom in designing the resonance frequency of the resonance structure.

When the receiver unit is to be attached to a device such as a handset, there are cases where the external space which communicates with the cavity of the receiver unit via the leakage path is explicitly ensured in the device to which the receiver unit is to be attached, and where the external space is not explicitly ensured. In the case where the external space is not explicitly ensured, the external space can be easily ensured simply by selecting the place where the through hole of the partition wall is formed, so as to be opposed to the internal space (the external space with respect to the cavity) which can be ensured in the device.

### Brief Description of the Drawings

Fig. 1A is a section view showing a receiver unit which is an embodiment of the invention;
Fig. 1B is a section view showing a use state of the receiver unit of Fig. 1A;
Fig. 2A is a section view showing a receiver unit which is another embodiment of the invention;
Fig. 2B is a section view showing a use state of the receiver unit of Fig. 2A;
Fig. 3A is a perspective view of a receiver unit of a further embodiment, as viewed from the front side;
Fig. 3B is a perspective view of a receiver unit of a still further embodiment, as viewed from the front side;
Fig. 3C is a perspective view of the receiver unit of Fig. 3A, as viewed from the rear side;
Fig. 4 is a section view showing a use state of a receiver unit of a still further embodiment of the invention;
Fig. 5 is a section view showing a receiver unit which is a still further embodiment of the invention;
Fig. 6 is a section view showing a receiver unit which is a still further embodiment of the invention;
Fig. 7 is a view showing a conventional example;
Fig. 8A is a diagram showing an equivalent circuit of a cavity structure in the invention;
Fig. 8B is a diagram showing an equivalent circuit of a conventional cavity structure;
Fig. 9 is a graph of sound pressure characteristics which are obtained in simulations of the equivalent circuits;
Fig. 10 is a graph of sound pressure characteristics showing a difference between functions due to existence/non-existence of a resonance structure; and
Fig. 11 is a graph of sound pressure characteristics showing a difference between functions due to existence/non-existence of a resonance structure in another example.

### Detailed Description of the Preferred Embodiment

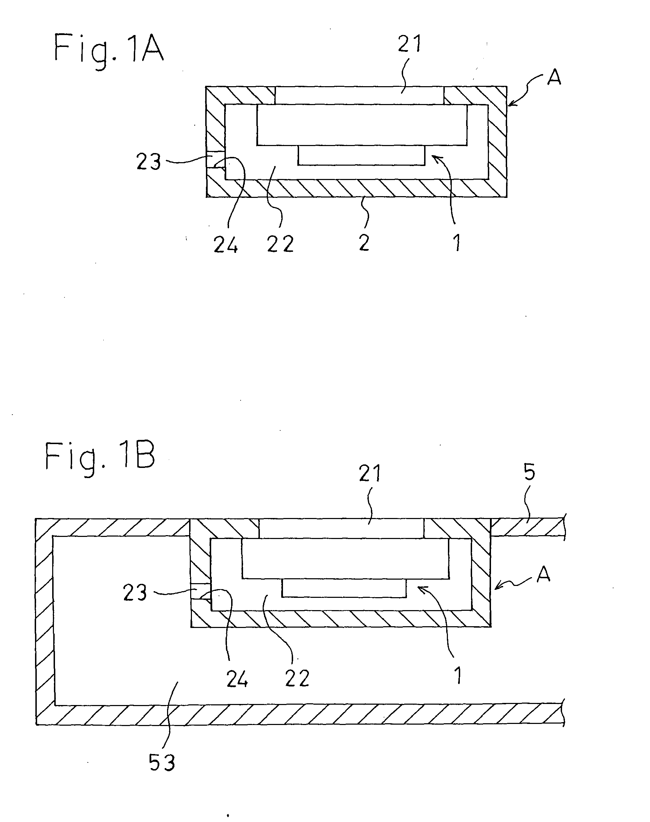

Fig. 1A is a section view showing a receiver unit A which is an embodiment of the invention, and Fig. 1B is a section view showing a use state of the receiver unit A.

The receiver unit A comprises a receiver body 1, and a case 2 which houses the receiver body 1. The receiver body 1 is coupled with the case 2 in a state where an outer peripheral portion of the front face of the receiver body 1 overlaps with the peripheral edge of an opening 21 formed in the case 2. The case 2 is preferably configured by a resin molded piece. The case 2 may have a circular shape in plan view, an oval or elliptic shape in plan view, or a rectangular or other polygonal shape in plan view. The receiver body 1 may be similarly shaped. When the case 2 is shaped into a rectangular shape in plan view (i.e., a rectangular parallelepiped shape), there is an advantage that the height can be made small for the internal volume and hence the case can be easily miniaturized. The opening 21 performs a function of introducing a sound emitted from the receiver body 1 to the outside of the case 2. A cavity (back cavity) 22 which is formed by the internal space of the case 2, and which is in contact with the receiver body 1 is positioned in a back portion of the receiver body 1. The back cavity 22 is separated from the external space by the wall of the case, and a through hole 24 constituting a leakage path 23 for acoustically coupling the back cavity 22 with the external space is formed in the case wall. The place where the through hole 24 constituting the leakage path 23 is formed may be in any position of the case wall, and preferably in a place opposed to the internal space ensured in a mobile information terminal device such as a handset to which the receiver unit A is to be attached. A receiver of the known type such as a dynamic receiver or a piezoelectric receiver can be used as the receiver body 1.

The receiver unit A shown in Fig. 1A is attached to, for example, an earpiece of the handset 5 of a portable telephone shown in Fig. 1B. In the attachment state, the leakage path 23 which is formed by the through hole 24 of the case 2 acoustically couples the back cavity 22 with the internal space 53 of the handset 5 serving as the external space.

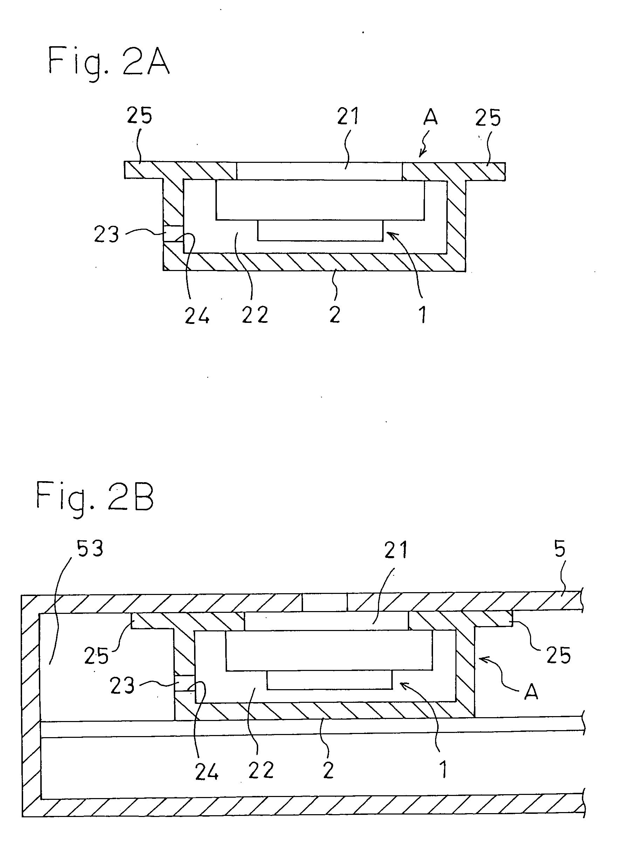

Fig. 2A is a section view showing a receiver unit A which is another embodiment of the invention, and Fig. 2B is a section view showing a use state of the receiver unit A.

The receiver unit A is different from the receiver unit of Fig. 1A in that an attachment piece 25 is formed integrally on the case 2. In the embodiment, as shown in Fig. 2B, the case 2 can be attached to the handset 5 via the attachment piece 25. The other configuration is identical with that which has been described above with reference to Figs. 1A and 1B. However, Fig. 2B is different from Fig. 1B in that the internal space 53 of the handset 5 is not placed below the lower face of the case 2 but around the case 2.

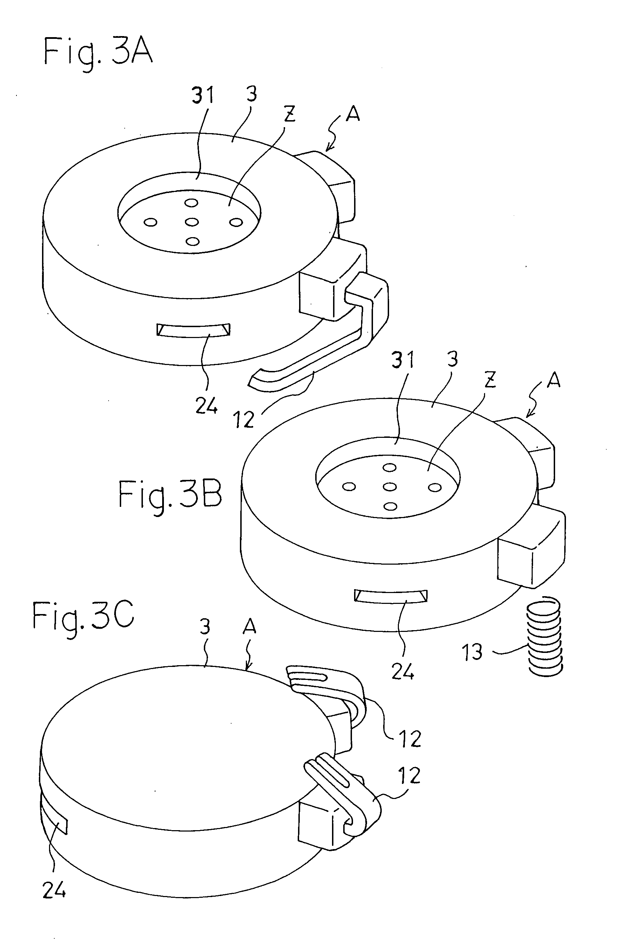

Figs. 3A, 3B, and 3C exemplarily show several other embodiments. Figs. 3A and 3B are perspective views of the receiver unit A as viewed from the front side, and Fig. 3C is a perspective view of the receiver unit A as viewed from the rear side. In all the examples, the case 2 shown in Figs. 1A and 1B, or Figs. 2A and 2B is housed in an electrically insulating holder 3, a through hole 24 constituting a leakage path 23 is passed through the holder 3, and the holder 3 comprises an opening 31 through which a sound hole forming region Z formed in the receiver body is exposed. In the examples of Figs. 3A and 3C, terminals 12 each configured by a plate spring are projected from the holder 3, and, in the example of Fig. 3B, terminals 13 each configured by a coil spring are disposed. A resin or rubber molded piece can be preferably used as the holder 3.

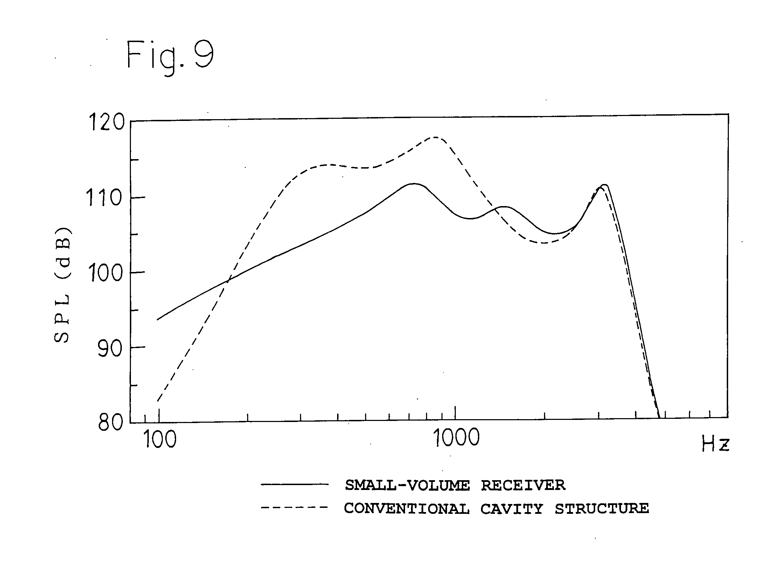

Fig. 8A is a diagram showing an equivalent circuit of the cavity structure of the receiver unit A which has been described with reference to Fig. 2B, and Fig. 8B is a diagram showing an equivalent circuit of the conventional cavity structure which has been described with reference to Fig. 7. Fig. 9 is a graph of sound pressure characteristics which are obtained in simulations of the equivalent circuits. In Fig. 9, the solid line indicates the sound pressure characteristic of the cavity structure of the receiver unit A of Fig. 2 B, i.e., that of a small-volume receiver unit, and the broken line indicates the sound pressure characteristic of the conventional cavity structure of Fig. 7. Parameters in the simulations of the equivalent circuits are as follows.

### <Parameters>

A. Cavity structure of the invention (small-volume receiver unit)
   Sound hole: 1 to 0.8 mm
   Leakage path: 1 to 0.5 mm
   Back cavity (cavity in case): 0.25 cc
   External volume: 3 cc
B. Conventional cavity structure
   Sound hole: 1 to 0.8 mm
   Leakage path: 1 to 0.8 mm
   Back cavity (internal space in handset): 10 cc

As seen from Fig. 9, when a receiver unit itself has a cavity structure as in the cavity structure in the invention, a flat characteristic which varies within 5 dB is obtained in the range from 400 Hz to 3.5 kHz as indicated by the solid line. By contrast, in the conventional cavity structure, a flat characteristic is obtained in the range from 300 Hz to 1 kHz as indicated by the broken line, but the sensitivity is lowered by 10 dB or more in the range from 1 kHz to 2 kHz. In the conventional cavity structure, the back cavity has a volume of 10 cc. By contrast, in the cavity structure in the invention, the back cavity in the case has a small volume of 0.25 cc, and also the volume (external volume) of the external space which communicates with the cavity via the leakage path is as small as 3 cc. Therefore, it will be seen that, in the receiver unit of the invention, a flat sound pressure characteristic can be obtained with using a small volume and miniaturization of a mobile information terminal device such as a handset equipped with the receiver unit of the invention can be easily realized.

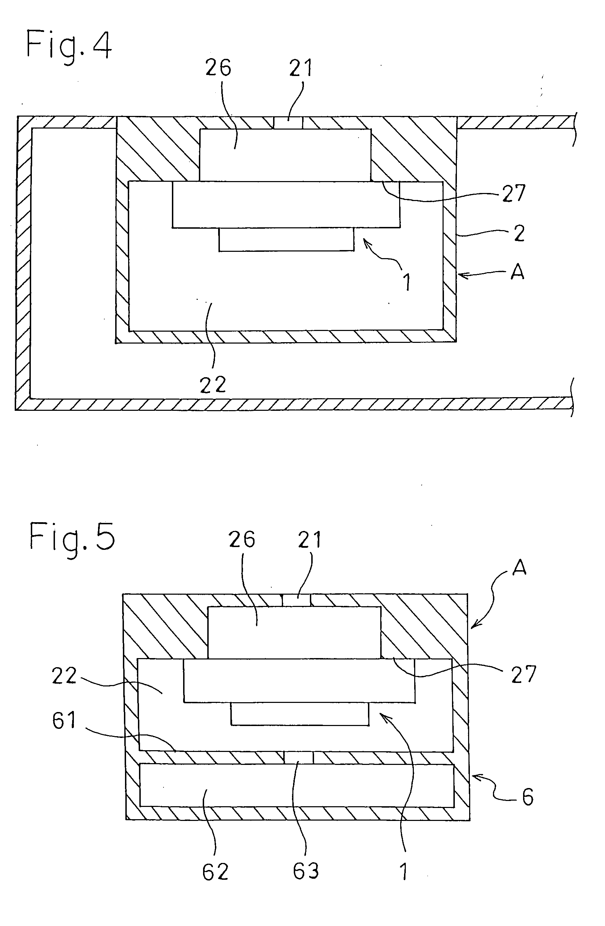

Fig. 4 is a section view showing a use state of a receiver unit A of a still further embodiment of the invention.

The receiver unit A comprises a receiver body 1, and a case 2 which houses the receiver body 1. The receiver unit has a front cavity 26 which is positioned in a front portion of the receiver body 1, in addition to a back cavity 22 which is in a back portion of the receiver body 1. Specifically, an outer peripheral portion of the front face of the receiver body 1 is overlappingly coupled with a partition face 27 which separates the front and back cavities 26, 22 from each other, so that the front cavity 26 is positioned in a front portion of the receiver body 1, and the back cavity 22 is positioned in a back portion. The other configuration is identical with that shown in Figs. 1A and 1B. In the embodiment of Fig. 4, a through hole constituting a leakage path for acoustically coupling the back cavity 22 with the external space may be formed in the wall of the case 2 of the receiver unit A. The place where the leakage path is formed may be in any position of the case wall, and preferably in a place opposed to the internal space ensured in a mobile information terminal device such as a handset to which the receiver unit A is to be attached.

Fig. 5 is a section view showing a receiver unit A which is a still further embodiment of the invention.

The receiver unit A is configured by adding a resonance structure 6 to the back cavity 22 which is formed by the case 2 of the receiver unit A that has been described with reference to Fig. 4. In the resonance structure 6 of the illustrated example, a partition wall 61 is disposed inside the back cavity 22 to reduce the volume of the back cavity 22. The resonance structure 6 is formed by a hollow chamber 62 which is formed by the partition wall 61, and a through hole 63 which is opened in the partition wall 61. The through hole 63 acoustically couples the back cavity 22 of the reduced volume with the hollow chamber 62.

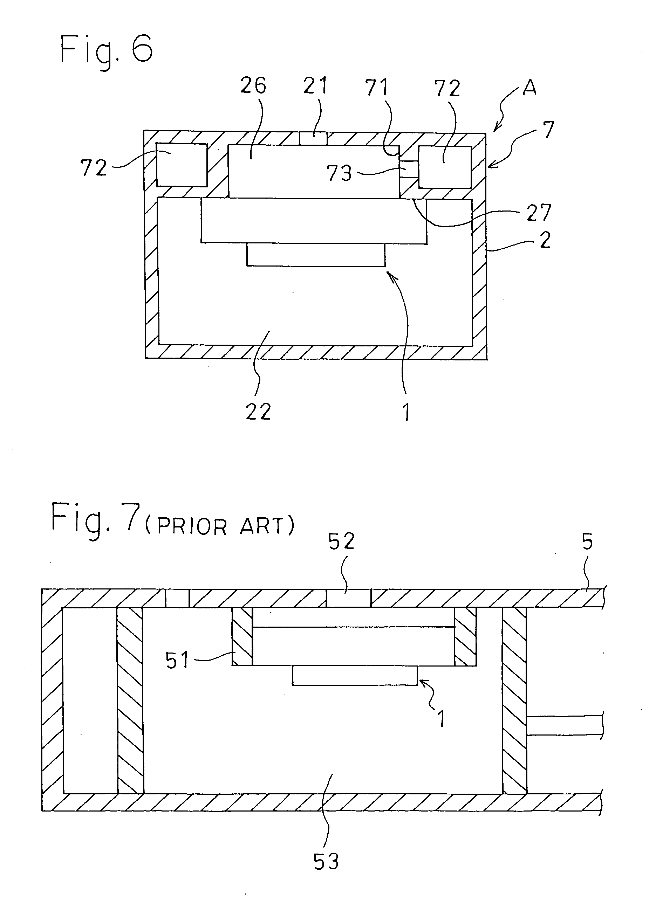

Fig. 6 is a section view showing a receiver unit A which is a still further embodiment of the invention.

The receiver unit A is configured by adding a resonance structure 7 to the front cavity 26 which is formed by the case 2 of the receiver unit A that has been described with reference to Fig. 4. In the resonance structure 7 of the illustrated example, an annular hollow chamber 72 is formed around the front cavity 26, a through hole 73 is opened in a partition wall 71 which separates the hollow chamber 72 from the front cavity 26, and the through hole 73 acoustically couples the front cavity 26 with the hollow chamber 72.

Each of the resonance structures 6, 7 which have been described with reference to Figs. 5 and 6 is a Helmholtz resonant structure configured by the through hole 63 or 73 and the hollow chamber 62 or 72. When the Helmholtz resonant structure is employed, the resonance frequency of the resonance structure 6 or 7 can be determined from the relationship between the size of the through hole 63 or 73 and the volume of the hollow chamber 62 or 72.

Also in the receiver units A which have been described with reference to Figs. 5 and 6, a through hole constituting a leakage path for acoustically coupling the back cavity 22 with the external space may be formed.

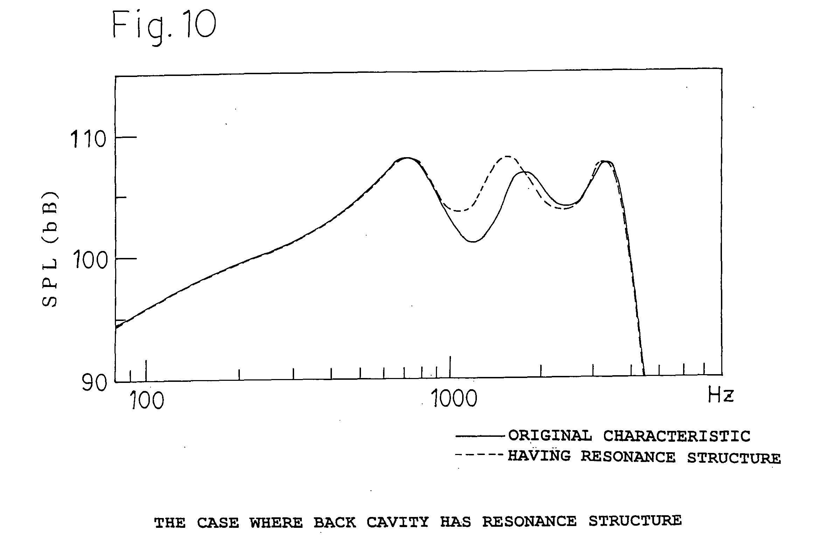

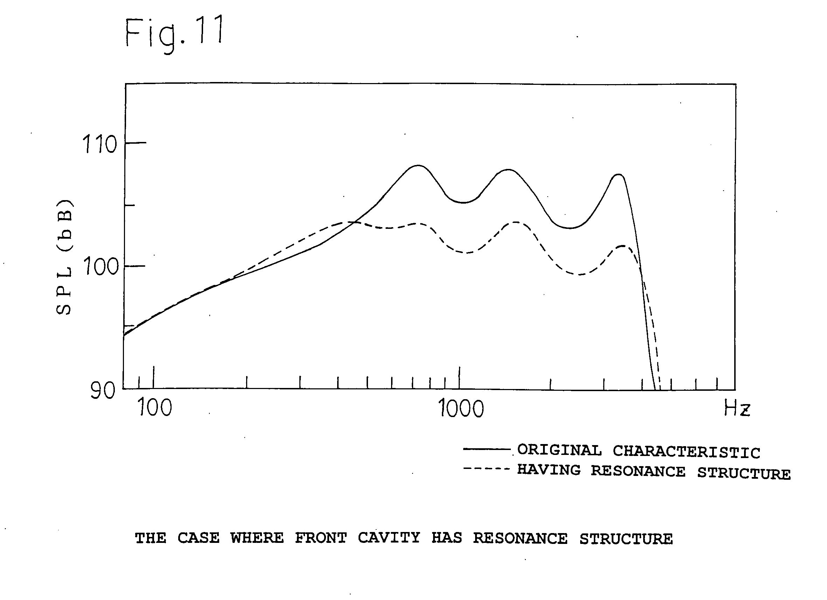

Fig. 10 is a graph showing: a sound pressure characteristic which is obtained in simulation of the equivalent circuit of the example of Fig. 5, i.e., the receiver unit A in which the back cavity 22 is provided with the resonance structure 6; and that of a configuration in which the resonance structure 6 is omitted. Fig. 11 is a graph showing: a sound pressure characteristic which is obtained in simulation of the equivalent circuit of the example of Fig. 6, i.e., the receiver unit A in which the front cavity 26 is provided with the resonance structure 7, and that of a configuration in which the resonance structure 7 is omitted. In each of the graphs, the solid line indicates the sound pressure characteristic in the case where the resonance structure 6 or 7 is omitted, and the broken line indicates that in the case where the resonance structure 6 or 7 is provided.

As shown in Fig. 10, the receiver unit in which the back cavity 22 is provided with the resonance structure 6 has a sound pressure characteristic that is flatter in the range from 1 kHz to 3.5 kHz than the characteristic in the receiver unit where the back cavity 22 is not provided with the resonance structure, and that has a peak in the vicinity of the resonance frequency.

As shown in Fig. 11, the receiver unit in which the front cavity 26 is provided with the resonance structure has a sound pressure characteristic that is flatter in the range from 700 Hz to 3.5 kHz than the characteristic in the receiver unit where the front cavity 26 is not provided with the resonance structure, and that has a dip in the vicinity of the resonance frequency.

## Claims

1. A receiver unit having a receiver body, wherein
said receiver unit has: said receiver body; and a cavity which is attached to an outer side of said receiver body to flatten a sound pressure characteristic of said receiver body.

2. A receiver unit according to claim 1, wherein the sound pressure characteristic of said receiver body is flattened by adding said cavity to a back portion of said receiver body.

3. A receiver unit according to claim 1, wherein the sound pressure characteristic of said receiver body is flattened by adding said cavity to a front portion of said receiver body.

4. A receiver unit according to claim 1, wherein the sound pressure characteristic of said receiver body is flattened by adding said cavity to each of back and front portions of said receiver body.

5. A receiver unit according to claim 1, wherein said cavity is formed by an internal space of a case which houses said receiver body.

6. A receiver unit according to claim 1, wherein said cavity is formed by an internal space of a case which houses said receiver body, and a through hole constituting a leakage path is formed in a wall of said case.

7. A receiver unit according to claim 1, wherein a resonant structure is added to said cavity.

8. A receiver unit according to claim 7, wherein said resonant structure comprises: a hollow chamber which is formed in said cavity by a partition wall; and a through hole which is opened in said partition wall to acoustically couple said cavity with said hollow chamber.

9. A receiver unit according to claim 1, wherein the sound pressure characteristic is based on evaluation using a leakage type artificial ear.

10. A receiver unit according to claim 7, wherein the sound pressure characteristic is based on evaluation using a leakage type artificial ear.

11. A receiver unit according to claim 1, wherein said cavity comprises a leakage path which acoustically communicates with an external space.

12. A receiver unit according to claim 11, wherein said external space is an internal space of a handset of a mobile information terminal device.

13. A receiver unit according to claim 5, wherein an attachment piece for attaching said case to a handset of a mobile information terminal device is molded integrally with said case.

14. A receiver unit according to claim 6, wherein said case is housed in an electrically insulating holder having an opening through which a sound hole forming region of said receiver body is exposed, and said through hole is passed through said holder.
